# DEMANDE DE BREVET EUROPEEN

(11) **EP 2 228 561 A1**
(43) Date de publication de la demande: **15.09.2010**
(21) Numéro de dépôt: 10155408.7
(22) Date de dépôt: 04.03.2010
(51) Int. Cl.: F16H 1/08, F16H 3/089, F16H 55/18, F16H 57/00

(54) **Système de transmission de mouvement à denture hélicoïdale**

(30) Priorité: 06.03.2009 FR 0951407
(71) Demandeur: Peugeot Citroën Automobiles SA, 78140 Vélizy-Villacoublay (FR)
(72) Inventeur: Le Dren, Arnaud, 91230, MONTGERON (FR)

(57) **Abrégé**

L'invention se rapporte à un système de transmission de mouvement à denture hélicoïdale comprenant au moins une première (16) et une deuxième roue dentée (10b), respectivement montées sur un premier (24) et un second (12) arbres parallèles, la première roue dentée (16) étant fixe selon une direction axiale tandis que la seconde (10b) est mobile selon la direction axiale, le système étant **caractérisé en ce qu**'il comporte des moyens élastiques (14a, 14b) pour amortir les chocs et filtrer les vibrations transmis à la seconde roue dentée (10b) selon la direction axiale par l'intermédiaire de la denture hélicoïdale.

## Description

La présente invention est relative à tous système de transmission de mouvement au moyen d'un engrenage à roues dentées.

L'invention concerne tous les systèmes à engrenages dans lesquels la transmission de couple associée à la transmission de mouvement génère un effort axial résultant. C'est le cas par exemple des engrenages à denture hélicoïdale ou hypoïde. En effet, dans ce type d'engrenages, l'angle de denture que comportent les roues dentées fait qu'un effort axial proportionnel au couple reçu par la roue dentée concernée

L'invention part de la constatation que de tels engrenages sont très utilisés, par exemple dans les boîtes de vitesses mécaniques de véhicules automobiles, mais qu'il n'est pas connu des systèmes « récupérant » cet effort axial généré par la transmission d'un mouvement de rotation et le couple associé.

On connaît par exemple le système décrit dans le document FR 2 227 464, qui met en oeuvre un système de transmission de mouvement comprenant trois roues dentées hélicoïdales montées sur des arbres parallèles, ces roues étant respectivement menante, intermédiaire et menée. La roue dentée intermédiaire est, du fait de sa denture hélicoïdale, soumise à des composantes axiales de la part des deux autres roues dentées. Si ces composantes axiales, de sens opposés, ne sont pas sensiblement égales (par exemple dans les phases transitoires), il se produit un couple de rotation qui est appliqué à la roue intermédiaire, et qui tend à la faire tourner autour d'un axe normal au plan contenant les deux composantes axiales, cet axe de rotation étant donc perpendiculaire à l'axe de rotation de l'arbre portant la roue intermédiaire. Afin de permettre une égalisation des composantes axiales décrites ci-dessus, le document décrit un montage de la roue dentée intermédiaire lui autorisant un pivotement limité autour de l'axe de rotation normal au plan contenant les composantes axiales, sous l'action du couple susmentionné. Toutefois ce montage n'autorise aucun mouvement axial de la roue dentée sous l'action de ces composantes axiales.

D'autre part, l'invention part également de la constatation qu'un certain nombre de caractéristiques relatives à une pièce mécanique, telles que la raideur, l'amortissement, l'inertie etc., sont beaucoup plus difficiles à maîtriser lorsqu'il s'agit du comportement d'une pièce en rotation que pour une pièce en translation. En effet, par exemple, la raideur en torsion d'une pièce est plus complexe à maîtriser que sa raideur en compression ou en flexion.

La présente invention a pour objet de fournir un système d'engrenage dans lequel l'effort axial généré par le couple transmis est utilisé afin de transposer la filtration radiale et de torsion en filtration axiale qui est plus facilement maîtrisable.

Ainsi l'invention concerne un système de transmission de mouvement à denture hélicoïdale comprenant au moins une première et une deuxième roue dentée, respectivement montées sur un premier et un second arbres parallèles, la première roue dentée étant fixe selon une direction axiale tandis que la seconde est mobile selon la direction axiale, le système étant **caractérisé en ce qu**'il comporte des moyens élastiques pour amortir les chocs et filtrer les vibrations transmis à la seconde roue dentée selon la direction axiale par l'intermédiaire de la denture hélicoïdale.

Selon une réalisation, la seconde roue dentée est mobile en translation sur le second arbre.

Selon une réalisation, la seconde roue dentée est fixe par rapport au second arbre, celui-ci étant mobile en translation de direction axiale par rapport à la première roue dentée.

Selon une réalisation, les moyens élastiques sont disposés d'un seul côté de la seconde roue dentée.

Selon une réalisation, les moyens élastiques sont doubles et disposés de part et d'autre de la seconde roue dentée.

Selon une réalisation, les moyens élastiques comprennent au moins une rondelle élastique de type « belleville ».

Selon une réalisation, les moyens élastiques comprennent au moins une cale en élastomère.

L'invention concerne en outre une boîte de vitesses pour véhicule automobile mettant en oeuvre un système de transmission de mouvement selon l'invention.

L'invention sera mieux comprise à la lecture de la description détaillée qui suit, faite en référence aux figures annexées, figure parmi lesquelles :
- les figures 1a et 1b montrent un pignon d'une boîte de vitesse assemblé respectivement conventionnellement et conformément à l'invention;
- la figure 2 représente une boîte de vitesses mécaniques conventionnelle sur laquelle l'invention peut être implémentée.

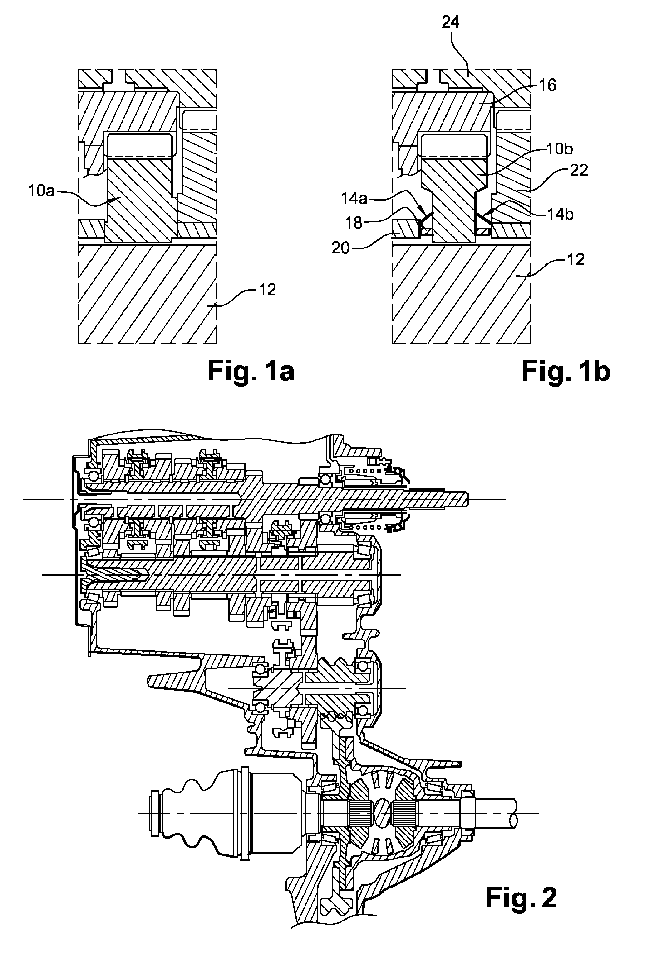

Les figures 1a et 1b représentent le détail d'une boîte de vitesses mécaniques d'un véhicule automobile, montrant l'assemblage d'un pignon sur un arbre, dans l'exemple le pignon correspondant au troisième rapport de marche avant. Sur la figure 1a, le pignon 10a est monté conventionnellement, c'est-à-dire qu'il est fixe en translation (et en rotation) sur son arbre 12. Sur la figure 1b, le pignon 10b est monté sur son arbre 12 conformément à l'invention, c'est-à-dire avec un jeu axial permettant un mouvement de translation sur son arbre 12 dans les deux sens. Le montage selon l'invention comprend des moyens élastiques 14a, 14b pour amortir les déplacements du pignon 10b et repousser celui-ci vers sa position centrale initiale.

Dans l'exemple, les moyens élastiques 14a, 14b sont deux rondelles élastiques du type « Belleville », disposées de part et d'autre du pignon. Ces rondelles peuvent être montées sous contrainte, ou, au contraire, avec un jeu. Alternativement, il est possible de ne monter qu'une seule rondelle. I est entendu que tout moyen élastique adapté peut avantageusement remplacé les rondelles « belleville » de l'exemple, tel qu'une ou plusieurs cales élastomères. Dans l'exemple montré sur la figure 1b, une des rondelles est montée contre une entretoise 20, tandis que la deuxième est maintenue par une roue dentée 22 voisine du pignon 10b. Dans cette configuration, mais sans que ce soit lié à l'invention, cette roue dentée est maintenue en position au moyen d'un jonc d'arrêt 18 disposé autour de l'arbre 12 et en appui à une de ses extrémités sur l'entretoise 20.

En fonctionnement, lorsque le pignon 10b subit des efforts de la part d'une roue dentée 16 (montée sur son arbre 24) avec laquelle il engrène, l'angle d'hélice de l'engrenage induit un effort axial proportionnel au couple, et toute variation de couple entraînera une variation proportionnelle de l'effort axial. Conformément à l'invention, cet effort axial induira un mouvement également axial du pignon qui sera repris par les moyens élastiques 14a, 14b d'amortissement et de filtration. Avantageusement, la largeur de denture du pignon 10b est inférieure à celle de la roue dentée 16 afin que le pignon soit toujours en contact sur toute sa largeur de denture avec la roue dentée 16, même lorsqu'il s'écarte de sa position centrale.

Il doit être compris que l'exemple détaillé ci-dessus n'est qu'un mode de réalisation de l'invention, qui consiste à réaliser l'amortissement et la filtration vibratoire d'une roue dentée hélicoïdale selon un axe linéaire et non en rotation comme dans l'état de la technique. Ainsi, tout moyen permettant d'assurer un déplacement élastique d'une roue dentée d'un engrenage afin d'amortir les chocs et de filtrer les vibrations entre dans le cadre de l'invention. En particulier, le pignon décrit ci-dessus peut être fixe par rapport à l'arbre, le mouvement élastique d'amortissement/filtration étant déporté sur l'arbre lui-même.

Enfin, si l'invention trouve une application avantageuse dans les boîtes de vitesses de véhicule, en particulier pour les pignons fixes comme montré sur la figure 2 (i.e. ceux qui ne sont pas montés « fous »), elle est applicable à tout engrenage à denture hélicoïdale.

## Revendications

1. Système de transmission de mouvement à denture hélicoïdale comprenant au moins une première (16) et une deuxième roue dentée (10b), respectivement montées sur un premier (24) et un second (12) arbres parallèles, la première roue dentée (16) étant fixe selon une direction axiale tandis que la seconde (10b) est mobile selon la direction axiale, le système étant **caractérisé en ce qu'**il comporte des moyens élastiques (14a, 14b) pour amortir les chocs et filtrer les vibrations transmis à la seconde roue dentée (10b) selon la direction axiale par l'intermédiaire de la denture hélicoïdale, puis repousser la seconde roue dentée (10b) vers sa position initiale.

2. Système selon la revendication 1, dans lequel la seconde roue dentée (10b) est mobile en translation sur le second arbre (12).

3. Système selon la revendication 1, dans lequel la seconde roue dentée (10b) est fixe par rapport au second arbre (12), celui-ci étant mobile en translation de direction axiale par rapport à la première roue dentée (16).

4. Système selon l'une des revendications 1 à 3, dans lequel les moyens élastiques (14a, 14b) sont disposés d'un seul côté de la seconde roue dentée (16).

5. Système selon l'une des revendications 1 à 3, dans lequel les moyens élastiques (14a, 14b) sont doubles et disposés de part et d'autre de la seconde roue dentée (16).

6. Système de transmission de mouvement selon la revendication 1, dans lequel les moyens élastiques (14a, 14b) comprennent au moins une rondelle élastique de type « belleville ».

7. Système de transmission de mouvement selon la revendication 1, dans lequel les moyens élastiques (14a, 14b) comprennent au moins une cale en élastomère.

8. Boîte de vitesses pour véhicule automobile mettant en oeuvre un système de transmission de mouvement selon l'une de revendications 1 à 7.
